# EUROPEAN PATENT SPECIFICATION

(11) **EP 4 016 858 B1**
(45) Date of publication and mention of the grant of the patent: **25.09.2024**
(21) Application number: 21209215.9
(22) Date of filing: 25.10.2013
(51) Int. Cl.: H04B 7/024, H04L 5/00, H04W 74/08

(54) **METHOD AND DEVICE FOR JOINT TRANSMISSION**
VERFAHREN UND VORRICHTUNG FÜR GEMEINSAME ÜBERTRAGUNGEN
PROCÉDÉ ET DISPOSITIF DE TRANSMISSION CONJOINTE

(43) Date of publication of application: 22.06.2022
(62) Divisional of application: 19174139.6
(73) Proprietor: Huawei Technologies Co., Ltd., Shenzhen, Guangdong 518129 (CN)
(72) Inventor: LIN, Yingpei, Shenzhen, 518129 (CN); ZHANG, Jiayin, Shenzhen, 518129 (CN)
(74) Representative: Epping - Hermann - Fischer

(56) References cited:
- EP-A2- 2 464 187

## Description

### TECHNICAL FIELD

The present invention relates to the field of communication technologies, and in particular, to a method and a device for joint transmission.

### BACKGROUND

Coordinated multiple point (Coordinated Multiple Point, CoMP) technology is an effective method for extending high data rate coverage and for improving cell edge throughput, or even whole system throughput in a long term evolution (Long Term Evolution, LTE) system. Joint transmission (Joint Transmission, JT) is a way to coordinate in the CoMP technology. In JT, data of a user is shared among coordinated nodes which send data to the user simultaneously. For example, eNodeB1, eNodeB2 and eNodeB3 provide CoMP service for UE1 which belongs to the eNodeB1, and these three eNodeBs send the same data to the UE1 simultaneously. With the rapid development of network technologies and mobile devices, wireless local area network technology (Wireless Local Area Networks, WLAN) based on IEEE 802.11 standard is significantly developed and widely applied, and it is desirable to perform coordinated transmission among multiple access points (Access Point, AP) in the WLAN by using the JT technology, so that the multiple APs in the WLAN can send data to a station (Station, STA) simultaneously.

However, following problems are encountered when applying the JT technology to the WLAN. The WLAN is different from the LTE in that the LTE uses a certain frequency band which is authorized, and thus a base station may perform scheduling on certain time and frequency resources, which ensures coordinated management among base stations; but the WLAN uses a free frequency band without authorization, a channel access mechanism of the WLAN is an access mechanism based on contention, where the AP and the STA access a channel via contention. This kind of contention mechanism results in an uncertainty in using the channel, APs which need to send data cooperatively are uncertain about when they can access channels, and it is hard to ensure that the APs obtain the right to use the channels simultaneously, and thus a synchronization requirement for joint transmission is difficult to be satisfied, and the asynchronization among the APs would substantially decrease the performance of joint transmission. Therefore, the uncertainty in the channel contention mechanism of the WLAN makes it hard to implement the JT technology in the WLAN.

EP 2 464 187 A2 discloses a method which comprises broadcasting a multicast broadcast single frequency network (MBSFN) subframe assignment in a system information block type 2 (SIB-2), wherein the SIB-2 comprises a MBSFN indicator and a long term evolution advanced (LTE-A) indicator.

### SUMMARY

The present invention provides a method and a device for joint transmission, so as to ensure synchronous transmission of APs during joint transmission.

A first aspect provides a method for joint transmission, which is applied in a wireless local area network system comprising an initiating access point, AP, a coordinated AP pre-determined to participate in the joint transmission and a station, STA, the method including:
sending, by the initiating AP to the STA, a request to send message used for the joint transmission, where the request to send message includes a joint transmission indication and address information of the coordinated AP;
receiving, by the initiating AP, a clear to send message from the STA;
sending, by the initiating AP, data to the STA after an interval of a first fixed time from receiving the clear to send message by the initiating AP, where the first fixed time is the same as a second fixed time, and where the second fixed time is a time interval between receiving the clear to send message and sending the data to the STA by the coordinated AP.

With reference to the first aspect, in a first possible implementation, a channel resource for the coordinated AP is reserved or obtained via contention.

With reference to the first aspect, in a third possible implementation, the sending, by the initiating AP, the data to the STA includes:
sending, by the initiating AP, the data to the STA in accordance with a joint transmission coordination mode corresponding to a number of APs participating in the joint transmission.

With reference to the third possible implementation of the first aspect, in a fourth possible implementation, before the initiating AP receives the clear to send message, further include: exchanging, by the initiating AP with the coordinated AP, joint transmission communication mode information, where the joint transmission communication mode information includes different numbers of APs and joint transmission coordination modes corresponding to the numbers of the APs.

With reference to any one of the first aspect to the fourth possible implementation of the first aspect, in a fifth possible implementation, the request to send message or the clear to send message is a control frame, including a frame header and a frame body, where the frame header includes a subtype field subtype, and where the frame body includes a category field category, an indication field indication and an indication elements field indication elements; a value of the subtype field subtype is configured to indicate that the request to send message or the clear to send message is a HEW Indication frame; a value of the category field category is configured to represent the joint transmission indication, a value of the indication field indication is configured to represent that the control frame is a request to send control frame used for the joint transmission or a clear to send control frame used for the joint transmission; the address information of the coordinated AP is set in the indication elements field indication elements.

With reference to any one of the first aspect to the fourth possible implementation of the first aspect, in a sixth possible implementation, the request to send message or the clear to send message is a control frame, the control frame represents, via a value of a subtype field subtype in a frame header, that the control frame is a request to send control frame used for the joint transmission or a clear to send control frame used for the joint transmission; the address information of the coordinated AP is set in a receive address field RA of the frame header.

A second aspect provides a method for joint transmission, which is applied in a wireless local area network system comprising an initiating access point, AP, a coordinated AP pre-determined to participate in the joint transmission and a station, STA, the method including:
receiving, by the coordinated AP, a clear to send message sent by the STA, where the clear to send message includes a joint transmission indication and address information of an AP participating in the joint transmission, and the address information of an AP participating in the joint transmission comprises address information of the coordinated AP;
sending, by the coordinated AP, data to the STA after an interval of a second fixed time from receiving the clear to send message, where the second fixed time is the same as a first fixed time, and where the first fixed time is a time interval between receiving the clear to send message and sending the data to the STA by the initiating AP.

With reference to the second aspect, in a first possible implementation, the channel resource for the coordinated AP is reserved or obtained via contention.

With reference to the second aspect, in a second possible implementation, before the receiving, by the coordinated AP, the clear to send message sent by the station STA, further include: receiving, by the coordinated AP, a joint transmission request message sent by the STA, where the joint transmission request message is configured for the STA to ask the coordinated AP whether to participate in the joint transmission, where the joint transmission request message includes the joint transmission indication and address information of a coordinated AP pre-determined to participate in the joint transmission; when determining, by the coordinated AP, that its own address information is included in the joint transmission request message and that it itself has the channel resource for participating in the joint transmission, returning a joint transmission request acknowledgment message to the STA, to enable the STA to determine a number of APs participating in the joint transmission, according to the joint transmission request acknowledgment message and include the number of the APs in the clear to send message; where the sending the data to the STA according to the clear to send message includes sending, by the coordinated AP, the data to the STA according to the number of the APs participating in the joint transmission included in the clear to send message and in accordance with a joint transmission coordination mode corresponding to the number of the APs.

With reference to the second possible implementation of the second aspect, in a third possible implementation, the joint transmission request message or the joint transmission request acknowledgment message is a control frame, including a frame header and a frame body; where the frame header includes a subtype field subtype, and the frame body includes a category field category, an indication field indication and an indication elements field indication elements; a value of the subtype field subtype is configured to indicate that the joint transmission request message or the joint transmission request acknowledgment message is a HEW Indication frame; a value of the category field category is configured to represent a joint transmission indication, a value of the indication field indication is configured to represent that the control frame is a joint transmission request control frame or a joint transmission request acknowledgment control frame; the address information of the coordinated AP is set in the indication elements field indication elements.

A third aspect provides a method for joint transmission, which is applied in a wireless local area network system comprising an initiating access point, AP, a coordinated AP pre-determined to participate in the joint transmission and a station, STA, the method including:
receiving, by the STA, a request to send message sent by the initiating AP, where the request to send message includes a joint transmission indication and address information of the coordinated AP;
sending, by the STA, according to the joint transmission indication, a clear to send message used for the joint transmission, to the coordinated AP corresponding to the address information and the initiating AP;
receiving, by the STA, data which is sent by the initiating AP after an interval of a first fixed time from receiving the clear to send message and the coordinated AP after an interval of a second fixed time from receiving the clear to send message, wherein the first fixed time is same as a second fixed time.

With reference to the third aspect, in a first possible implementation, after the receiving, by the station STA, the request to send message sent by the initiating AP, and before the sending the clear to send message to the coordinated AP corresponding to the address information and the initiating AP, further including: sending, by the STA, a joint transmission request message to the coordinated AP, where the joint transmission request message is configured for the STA to ask the coordinated AP whether to participate in the joint transmission, where the JTR frame includes the joint transmission indication and the address information of the coordinated AP pre-determined to participate in the joint transmission; receiving ,by the STA, a joint transmission request acknowledgment message returned by the coordinated AP, where the joint transmission request acknowledgment message is sent by the coordinated AP when determining that its own address information is included in the joint transmission request message and that it itself has a channel resource for participating in the joint transmission; determining, by the STA, according to the joint transmission request acknowledgment message, a number of APs participating in the joint transmission, and including the number of the APs in the clear to send message; where the receiving, by the STA, the data which is sent simultaneously by the initiating AP and the coordinated AP according to the clear to send message after the initiating AP and the coordinated AP receive the clear to send message includes: receiving, by the STA, the data which is sent to the STA simultaneously by the initiating AP and the coordinated AP in accordance with a joint transmission coordination mode corresponding to the number of the APs included in the clear to send message after the initiating AP and the coordinated AP receive the clear to send message.

A fourth aspect provides an initiating access point AP, which is applied in a wireless local area network system comprising the initiating access point, AP, a coordinated AP pre-determined to participate in the joint transmission and a satation, STA, the initiating AP including:
an information transceiving unit, configured to send, to the STA, a request to send message used for the joint transmission, where the request to send message includes a joint transmission indication and address information of the coordinated AP; and configured to receive the clear to send message;
a data transmission unit, configured to, send the data to the STA after an interval of a first fixed time from a time when the information transceiving unit receives the clear to send message, where the first fixed time is the same as a second fixed time, and where the second fixed time is a time interval between receiving the clear to send message and sending the data to the STA by the coordinated AP

With reference to the fourth aspect, in a second possible implementation, the data transmission unit is specifically configured to send data to the STA in accordance with a joint transmission coordination mode corresponding to a number of APs participating in the joint transmission.

With reference to the second possible implementation of the fourth aspect, in a third possible implementation, the information transceiving unit is further configured to exchange joint transmission communication mode information with the coordinated AP before receiving the clear to send message, where the joint transmission communication mode information includes different numbers of APs and joint transmission coordination modes corresponding to the numbers of APs.

With reference to any one of the fourth aspect to the third possible implementation of the fourth aspect, in a fourth possible implementation, the request to send message or the clear to send message is a control frame, including a frame header and a frame body; the frame header includes a subtype field subtype, and the frame body includes a category field category, an indication field indication and an indication elements field indication elements; a value of the subtype field subtype is configured to indicate that the request to send message or the clear to send message is a HEW Indication frame; a value of the category field category is configured to represent the joint transmission indication, a value of the indication field indication is configured to represent that the control frame is a request to send control frame used for the joint transmission or a clear to send control frame used for the joint transmission; and the address information of the coordinated AP is set in the indication elements field indication elements.

With reference to any one of the fourth aspect to the third possible implementation of the fourth aspect, in a fifth possible implementation, the request to send message or the clear to send message is a control frame, the control frame represents, via a value of a subtype field subtype in a frame header, that the control frame is a request to send control frame used for the joint transmission or a clear to send control frame used for the joint transmission; and the address information of the coordinated AP is set in a receive address field RA of the frame header.

A fifth aspect provides a coordinated access point AP, which is applied in a wireless local area network system comprising an initiating access point, AP, the coordinated AP pre-determined to participate in the joint transmission and a station, STA, the coordinated AP including:
an information transceiving unit, configured to receive a clear to send message sent by the STA, where the clear to send message includes a joint transmission indication and address information of an AP participating in the joint transmission and the address information of an AP participating in the joint transmission comprises address information of the coordinated AP;
a data transmission unit, configured to, send data to the STA after an interval of a second fixed time from a time when the information transceiving unit receives the clear to send message, where the second fixed time is the same as a first fixed time, and where the first fixed time is a time interval between receiving the clear to send message and sending the data to the STA by the initiating AP.

With reference to the fifth aspect, in a first possible implementation, the information transceiving unit is further configured to, before receiving the clear to send message sent by the station STA, receive a joint transmission request message sent by the STA, where the joint transmission request message is configured for the STA to ask the coordinated AP whether to participate in the joint transmission, where the joint transmission request message includes the joint transmission indication and address information of a coordinated AP pre-determined to participate in the joint transmission; the information processing unit is further configured to, when determining that its own address information is included in the joint transmission request message and that it itself has a channel resource for participating in the joint transmission, instruct the information transceiving unit to return a joint transmission request acknowledgment message to the STA, to enable the STA to determine a number of APs participating in the joint transmission according to the joint transmission request acknowledgment message and include the number of the APs in the clear to send message; the data transmission unit is specifically configured to send the data to the STA according to the number of the APs participating in the joint transmission included in the clear to send message, in accordance with a joint transmission coordination mode corresponding to the number of the APs, after an interval of a second fixed time from a time when the clear to send message is received; where the second fixed time is the same as a first fixed time, where the first fixed time is a time interval between receiving the clear to send message and sending the data to the STA by the initiating AP.

With reference to the first possible implementation of the fifth aspect, in a third possible implementation, the joint transmission request message or the joint transmission request acknowledgment message is a control frame, including a frame header and a frame body; the frame header includes a subtype field subtype, and the frame body includes a category field category, an indication field indication and an indication elements field indication elements; a value of the subtype field subtype is configured to indicate that the joint transmission request message or the joint transmission request acknowledgment message is a HEW Indication frame; a value of the category field category is configured to represent the joint transmission indication, a value of the indication field indication is configured to represent that the control frame is a joint transmission request control frame or a joint transmission request acknowledgment control frame; and the address information of the coordinated AP is set in the indication elements field indication elements.

A sixth aspect provides a station STA, which is applied in a wireless local area network system comprising an initiating access point, AP, a coordinated AP pre-determined to participate in the joint transmission and the STA, the coordinated AP including:
an information transceiving unit, configured to receive a request to send message sent by the initiating AP, where the request to send message includes a joint transmission indication and address information of the coordinated AP; and to send, according to the joint transmission indication, a clear to send message used for the joint transmission, to the coordinated AP corresponding to the address information and the initiating AP; and
a data receiving unit, configured to receive data which is sent by the initiating AP after an interval of a first fixed time from receiving the clear to send message and the coordinated AP after an interval of a second fixed time from receiving the clear to send message, wherein the first fixed time is same as a second fixed time.

With reference to the sixth aspect, in a first possible implementation, the information transceiving unit is further configured to send a joint transmission request message to the coordinated AP when a channel resource of the coordinated AP is obtained via contention, where the joint transmission request message is configured for the STA to ask the coordinated AP whether to participate in the joint transmission, where the JTR frame includes the joint transmission indication and the address information of the coordinated AP pre-determined to participate in the joint transmission; and to receive a joint transmission request acknowledgment message returned by the coordinated AP, where the joint transmission request acknowledgment message is sent by the coordinated AP when the coordinated AP determines that its own address information is included in the joint transmission request message and that it itself has a channel resource for participating in the joint transmission; and an information processing unit is further included which is configured to determine, according to the joint transmission request acknowledgment message, a number of APs participating in the joint transmission, and to include the number of the APs in the clear to send message; where, the data receiving unit is specifically configured to receive data, which is sent to the STA simultaneously by the initiating AP and the coordinated AP in accordance with a joint transmission coordination mode corresponding to the number of the APs included in the clear to send message after the initiating AP and the coordinated AP receive the clear to send message.

The method and the device for joint transmission according to the present invention give rise to the technical effects that: through sending by a STA a clear to send message to a coordinated AP, an initiating AP notifies the coordinated AP of sending data to the STA according to the clear to send message simultaneously together with the initiating AP, so that the coordinated AP and the initiating AP can realize synchronous transmission according to the clear to send message, thereby ensuring synchronous transmission among APs participating in the coordination during the joint transmission.

### □BRIEF DESCRIPTION OF DRAWINGS

FIG 1 is an optional scenario applicable to embodiments of a method for joint transmission according to the present invention;
FIG 2 is a flowchart for an embodiment of the method for joint transmission according to the present invention;
FIG 3 is a flowchart for another embodiment of the method for joint transmission according to the present invention;
FIG 4 is a flowchart for still another embodiment of the method for joint transmission according to the present invention;
FIG 5 is a schematic structural diagram of MAC layer frame header control fields in still another embodiment of the method for joint transmission according to the present invention;
FIG 6 is a schematic structural diagram of a CTS frame in still another embodiment of the method for joint transmission according to the present invention;
FIG 7 is a schematic structural diagram of fields in a HEW Indication frame body in still another embodiment of the method for joint transmission according to the present invention;
FIG 8 is a flowchart of a transmission process in still another embodiment of the method for joint transmission according to the present invention;
FIG 9 is a flowchart of a transmission process in still another embodiment of the method for joint transmission according to the present invention;
FIG 10 is a schematic structural diagram for an embodiment of an initiating AP according to the present invention;
FIG 11 is a schematic structural diagram for an embodiment of a coordinated AP according to the present invention;
FIG 12 is a schematic structural diagram for an embodiment of a station STA according to the present invention; and
FIG 13 is a schematic structural diagram for another embodiment of the station STA according to the present invention.

### □DESCRIPTION OF EMBODIMENTS

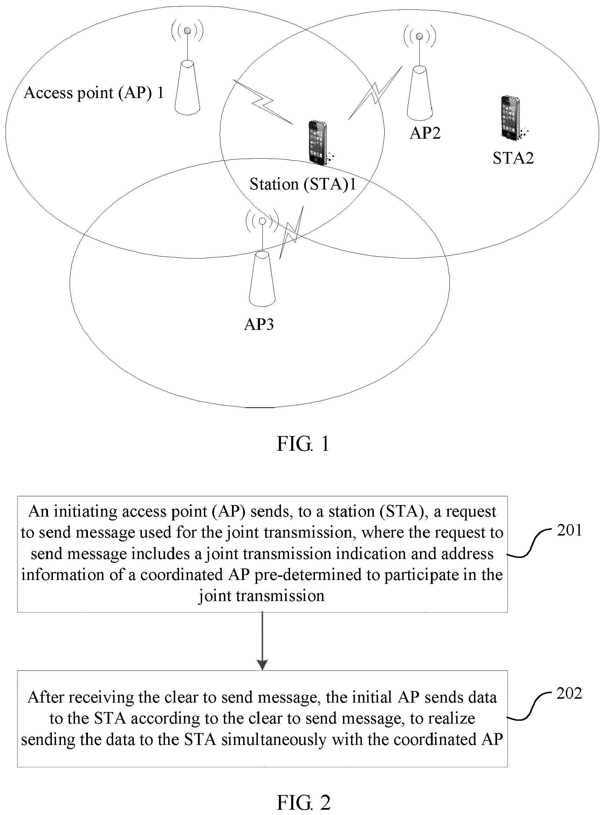

Embodiments of the present invention provides a method for joint transmission (JT), the method may be applied in WLAN where a channel is obtained based on contention. FIG 1 is an optional scenario applicable to embodiments of the method for joint transmission according to the present invention. As shown in FIG 1, STA1 is associated with AP1, and AP2 and AP3 are coordinated APs of the AP1. The AP1, the AP2 and the AP3 are APs cooperating with each other and are belonging to a same coordination set, and they establish a coordination relationship for participating in a joint transmission and can cooperate to send data to the STA1 jointly. Taking FIG 1 as an example, the method for joint transmission according to the present invention describes how to ensure data to be sent to the STA1 simultaneously among the AP1, the AP2 and the AP3, so as to satisfy the synchronization requirement for JT. For the convenience of description, the AP1 is referred to as an initiating AP, namely, the STA1 is associated with the AP1, and the AP1 initiates this JT and requests the AP2 and the AP3 to cooperate with it to send data to the STA1; the AP2 and the AP3 are referred to as coordinated APs, which mainly cooperate with the AP1 to send data simultaneously.

### Embodiment 1

FIG 2 is a flowchart for an embodiment of a method for joint transmission according to the present invention. This method may be executed by an initiating AP. As shown in FIG 2, the method of the embodiment may include:
201, an initiating access point (AP) sends, to a station (STA), a request to send message used for joint transmission, where the request to send message includes a joint transmission indication and address information of a coordinated AP pre-determined to participate in the joint transmission.

For example, the initiating AP may be the AP1 as shown in FIG 1, which can send the request to send message to the STA1 after obtaining a channel resource via contention. The request to send message includes a joint transmission indication and address information of a coordinated AP pre-determined to participate in the joint transmission. In the following description of the embodiment, for example, the request to send message may be a request to send control frame used for joint transmission (JT-RTS), the JT-RTS control frame is taken as an example to describe the solution of the present invention; of course, in a specific embodiment, the request to send message may also be a control frame with other names or in other forms.

In this embodiment, for example, the JT-RTS control frame includes the joint transmission indication, so that the STA can learn that a joint transmission mode is going to be performed subsequently according to the joint transmission indication after receiving the JT-RTS control frame, and thus the STA may execute corresponding subsequent processes, such as asking a coordinated AP whether it can participate in the joint transmission and etc. The coordinated AP pre-determined to participate in the joint transmission is obtained in advance by intercommunication between the initiating AP and a AP with which the initiating AP has established a coordination relationship, for example, since the AP1 has already established a coordinated relationship with the AP2 and the AP3 in advance, the AP1 may thus take the AP2 and the AP3 as the coordinated APs pre-determined to participate in the joint transmission and carry address information of the AP2 and the AP3 in the JT-RTS control frame to notify the STA.

After receiving the JT-RTS control frame, the STA may determine, according to the joint transmission indication, that a process the STA would perform subsequently is to send a clear to send control frame used for the joint transmission (JT-CTS) to the coordinated AP corresponding to the address information included in the JT-RTS control frame and the initiating AP.

In this embodiment, a main function of the JT-RTS control frame is that, after obtaining a channel via contention, the initiating AP sends the JT-RTS control frame to the STA to notify the STA of information about the coordinated AP, such as the number of coordinated APs participating in this joint transmission and the address information of these coordinated APs. A main function of the JT-CTS control frame is that, the STA sends the JT-CTS control frame to each AP participating in the joint transmission, and each AP may then perform synchronous data transmission accordingly after receiving the JT-CTS control frame.

202, after receiving the clear to send message, the initiating AP sends data to the STA according to the clear to send message, to realize sending the data to the STA simultaneously with the initiating AP.

The clear to send message may also include the joint transmission indication and the address information of the AP participating in the joint transmission. It should be noted that, the AP participating in the joint transmission described herein may be an AP pre-determined to participate in the joint transmission, or may be an AP determined to participate in the joint transmission, which will be described in detail in the following description of the embodiment. In the following description of the embodiment, for example, the clear to send message may be a JT-CTS control frame, and the JT-CTS control frame is taken as an example to describe the solution of the present invention; of course, in a specific embodiment, the clear to send message may also be a control frame with other names or in other forms.

After receiving the JT-CTS control frame, when the coordinated AP determines, according to the joint transmission indication included in the JT-CTS control frame, that the JT-CTS control frame includes its own address information and that it itself has a channel resource for participating in the joint transmission, the coordinated AP sends data to the STA according to the JT-CTS control frame simultaneously. With regard to having the channel resource for participating in the joint transmission, the channel resource herein may be reserved or obtained via contention.

Optionally, the JT-CTS control frame may include the address information of the initiating AP, and may not include the address information of the initiating AP. After receiving the JT-CTS control frame, the initiating AP sends data to the STA according to the control frame. For example, the initiating AP sends data to the STA after an interval of a fixed time (e.g., an interval of a short inter-frame space (Short Inter-Frame Space, SIFS), where the SIFS for the interval of the initiating AP may be referred to as a first fixed time) from a time when the JT-CTS control frame is received. The initiating AP may not need to perform judgments on the address information etc as the coordinative AP does, and may directly start to send data to the STA after an interval of a fixed time from receiving the JT-CTS control frame.

Further, the sending of data to the STA simultaneously by the initiating AP and the coordinated AP according to the JT-CTS control frame may be: starting to send data to the STA simultaneously after intervals of a same fixed time from receiving the JT-CTS control frame (for example, the interval from receiving the JT-CTS control frame for the initiating AP and that for the coordinated AP are both SIFS, where the SIFS for the interval of the initiating AP may be referred to as a first fixed time, while the SIFS for the interval of the coordinated AP may be referred to as a second fixed time).

Further, the JT-CTS control frame may also include the number of APs participating in the joint transmission, and in this case, the sending of data to the STA simultaneous by the initiating AP and the coordinated AP according to the JT-CTS control frame may be: starting to send the data to the STA simultaneously after intervals of the same fixed time from receiving the JT-CTS control frame, in accordance with a joint transmission coordination mode corresponding to the number of APs.

For example, when there are two APs participating in the JT, the transmission may be performed in accordance with a joint transmission coordination mode M1; when there are three APs participating in the JT, the transmission may be performed in accordance with a joint transmission coordination mode M2; in this way, the performance of the joint transmission may be improved by applying a coordination mode adaptive to the number of APs. In a specific implementation, the initiating AP and the coordinated AP may save joint transmission communication mode information, respectively, this mode information may be exchanged in advance, and the joint transmission communication mode information includes different numbers of APs and joint transmission coordination modes corresponding to the numbers of APs.

In the method for joint transmission according to this embodiment, the STA sends a JT-CTS control frame to the coordinated AP to notify the coordinated AP of sending data to the STA simultaneously with the initiating AP according to the JT-CTS control frame, so that the coordinated AP and the initiating AP can realize synchronous transmission according to the JT-CTS control frame, for example, the coordinated AP and the initiating AP both start synchronous transmissions after an interval of SIFS from receiving the JT-CTS control frame, thereby ensuring synchronous transmission among APs participating in the coordination and improving the joint transmission performance of WLAN.

### Embodiment 2

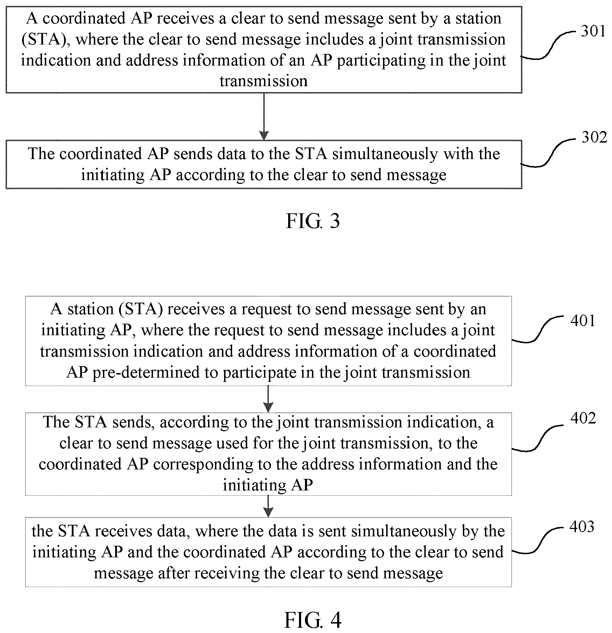

FIG 3 is a flowchart for another embodiment of the method for joint transmission according to the present invention. This method may be executed by a coordinated AP. As shown in FIG 3, the method according to this embodiment may include:
301, a coordinated AP receives a clear to send message sent by a station (STA), where the clear to send message includes a joint transmission indication and address information of an AP participating in the joint transmission.

For example, the coordinated AP may be the AP2 and the AP3 as shown in FIG 1, which would receive a JT-CTS control frame sent by the STA1, the JT-CTS control frame is sent by the STA after receiving a JT-RTS control frame sent by an initiating AP, referring to embodiment 1 for the details. The JT-CTS control frame in this embodiment includes the joint transmission indication and the address information of the AP participating in the joint transmission; the AP participating in the joint transmission may be an AP pre-determined to participate in the joint transmission or an AP determined to participate in the joint transmission.

302, the coordinated AP sends data to the STA simultaneously with the initiating AP according to the clear to send message.

According to the joint transmission indication included in the JT-CTS control frame, when the coordinated AP determines that the address information in the JT-CTS control frame includes its own address information and that it itself has a channel resource for participating in the joint transmission, the coordinated AP then sends data to the STA simultaneously with the initiating AP according to the JT-CTS control frame.

Similar to embodiment 1, the coordinated AP sends data to the STA simultaneously with the initiating AP according to the JT-CTS control frame, which may be, both the coordinated AP and the initiating AP send data to the STA simultaneously after an interval of the same fixed time (for example, an interval of SIFS) from the JT-CTS control frame, after receiving the JT-CTS control frame.

Or, the coordinated AP and the initiating AP may send data to the STA simultaneously after receiving the JT-CTS control frame and after an interval of the same fixed time from the JT-CTS control frame, according to the number of APs participating in the joint transmission included in the JT-CTS control frame, in accordance with a joint transmission coordination mode corresponding to the number of APs. In this case, before receiving the JT-CTS control frame sent by the STA, the coordinated AP may also receive a joint transmission request message sent by the STA. The joint transmission request message is, for example, a joint transmission request control frame, i.e. a JTR frame, where the JTR frame is configured for the STA to ask the coordinated AP whether to participate in the joint transmission. The JTR frame includes the joint transmission indication and the address information of the coordinated AP pre-determined to participate in the joint transmission. When the coordinated AP determines that its own address information is included in the JTR frame and that it itself has a channel resource for participating in the joint transmission, the coordinated AP then returns a joint transmission request acknowledgment message to the STA, where this message is, for example, a joint transmission request acknowledgment (JTRA) control frame. In this way, the STA may determine the number of APs participating in the joint transmission according to the JTRA control frame, and includes the number of APs in the JT-CTS control frame.

### Embodiment 3

FIG 4 is a flowchart for another embodiment of the method for joint transmission according to the present invention. This method may be executed by a station (STA). As shown in FIG 4, the method according to this embodiment may include:
401, a station (STA) receives a request to send message sent by an initiating AP, where the request to send message includes a joint transmission indication and address information of a coordinated AP pre-determined to participate in the joint transmission.

The coordinated AP pre-determined to participate in the joint transmission is determined by the initiating AP. The initiating AP has already established a coordinated relationship with the AP in advance, and has learnt the address information of the coordinated AP, and thus can carry the address information of the coordinated AP in a JT-RTS control frame and send to the STA. The initiating AP may send the JT-RTS control frame to the STA after determining that it has obtained a channel resource via contention.

402, the STA sends, according to the joint transmission indication, a clear to send message used for the joint transmission, to the coordinated AP corresponding to the address information and the initiating AP.

After receiving the JT-RTS control frame sent by the initiating AP, the STA learns, according to the joint transmission indication included in the JT-RTS control frame, that joint transmission is going to be performed subsequently; then, the STA may send a JT-CTS control frame to the coordinated AP corresponding to the address information in the JT-RTS control frame and the initiating AP, to enable the initiating AP and the coordinated AP to send data to the STA according to the JT-CTS control frame simultaneously.

Further, if the channel resource of the coordinated AP is obtained via contention, then the STA may also send a JTR frame to the coordinated AP corresponding to the address information in the JT-RTS control frame after receiving the JT-RTS control frame sent by the initiating AP and before sending the JT-CTS control frame to the coordinated AP and the initiating AP, where the JTR frame is configured for the STA to ask the coordinated AP whether to participate in the joint transmission, and where the JTR frame includes the joint transmission indication and the address information of the coordinated AP pre-determined to participate in the joint transmission. When the coordinated AP determines that its own address information is included in the JTR frame and that it itself has a channel resource for participating in the joint transmission (this resource may be reserved or obtained via contention for example), the coordinated AP may return a JTRA control frame to the STA to acknowledge that it can participate in this JT. The STA may determine the number of APs participating in the joint transmission and the address information according to the JTRA control frame it received, and include the number of APs and the address information in the JT-CTS control frame.

Of course, the above manners that the STA asks the coordinated AP whether to participate in the JT by sending a JTR control frame, and the coordinated AP notifies the STA that it may participate by returning a JTRA control frame, are all optional manners. In specific implementations, the STA and the AP may interact in other manners.

403, the STA receives data, where the data is sent simultaneously by the initiating AP and the coordinated AP according to the clear to send message after receiving the clear to send message.

Further, when the JT-CTS control frame includes the number of APs that can participate in the joint transmission, the initiating AP and the coordinated AP would simultaneously send data to the STA in accordance with a joint transmission coordination mode corresponding to the number of APs included in the JT-CTS control frame after receiving the JT-CTS control frame. In this way, the performance of joint transmission can be improved.

In the following embodiments, two optional joint transmission modes will be illustrated. The following description relates to several types of control frames used for the method for joint transmission in WLAN in the embodiments of the present invention, such as JT-RTS control frame, JT-CTS control frame, JTR control frame and JTRA control frame. Firstly, structures of these control frames are described through an embodiment.

### Embodiment 4

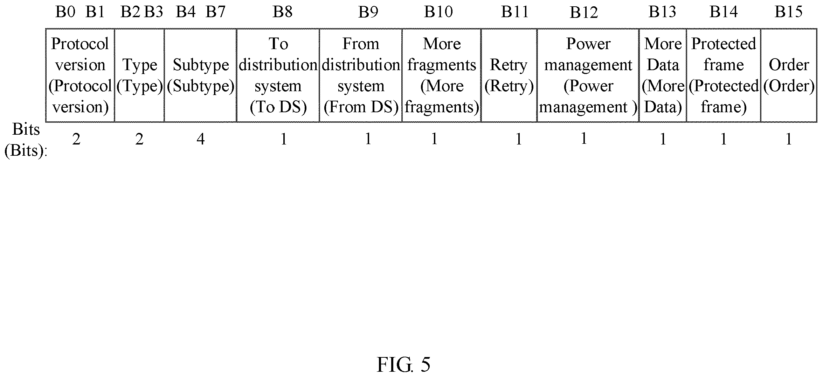

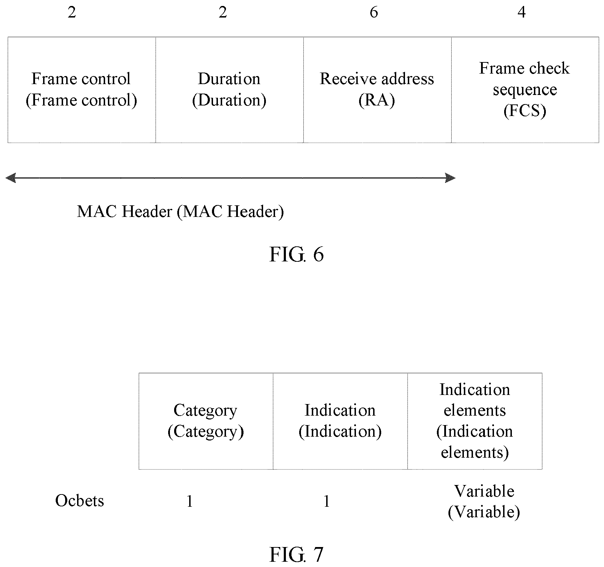

This embodiment describes frame structures of control frames used in the method for joint transmission where two optional frame structures are mainly described:
A frame structure is as follows: a JT-RTS control frame or a JT-CTS control frame may be indicated in a MAC frame header of a current MAC layer frame structure. Please refer to FIG 5, which is a schematic structural diagram of MAC layer frame header control fields in still another embodiment of the method for joint transmission according to the present invention. The value of the subtype field subtype in the frame header may be used to indicate that this frame is a JT-RTS control frame or a JT-CTS control frame. FIG 6 is a schematic structural diagram of a CTS frame in still another embodiment of the method for joint transmission according to the present invention. Please refer to FIG 6, address information of a coordinated AP may be set in a receive address field RA of the frame header (MAC Header). In this way, when receiving a frame, a STA or an AP may determine whether this frame is a JT-RTS control frame or a JT-CTS control frame for the joint transmission manner according to the subtype of the frame.

Another frame structure is as follows: a new control frame is introduced, specifically, the subtype shown in FIG 5 is a reserved field (Reserved) when its value is 0000-0110, and accordingly, a control subtype is introduced in this embodiment: HEW Indication, where the value of the subtype for the HEW Indication may be defined as 0110. As shown in Table 1, the control frame needed for the joint transmission is set under the control frame of the HEW Indication subtype. It should be noted that, this embodiment is only exemplary, and may be modified in specific embodiments, for example, the introduced control subtype may have names other than HEW Indication; moreover, the value of the subtype for the HEW Indication may be any other value within the reserved field 0000-0101.

**Table 1 Description for subtypes of the control frame after introducing HEW Indication**

| Type | Type description | Subtype | Subtype description |
|---|---|---|---|
| 01 | Control | 0000-0101 | Reserved |
| | | **0110** | **HEW Indication** |
| | | 0111 | Control Wrapper |
| | | 1000 | Block Ack Request |
| | | 1001 | Block Ack |
| | | 1010 | PS-Poll |
| | | 1011 | RTS |
| | | 1100 | CTS |
| | | 1101 | ACK |
| | | 1110 | CF-End |
| | | 1111 | CF-End+CF-Ack |

The HEW Indication control frame includes a frame header and a frame body, the subtype field subtype is in the frame header, the frame header of the HEW Indication control frame may be designed in the same format as the current control frame header with specific control information being put in the frame body (Frame body). In this way, a traditional STA may also acquire relevant information, such as NAV information, from the MAC frame header of the HEW Indication control frame, so as to avoid problems of interference and hidden stations, thereby realizing backward compatibility.

With regard to the frame body structure of the HEW Indication control frame, please refer to FIG 7, which is a schematic structural diagram of fields in the HEW Indication frame body in still another embodiment of the method for joint transmission according to the present invention. The frame body includes a category field category, an indication field indication and an indication elements field indication elements. The value of the category field category is configured to indicate the type of HEW Indication, and as shown in Table 2, the value of the category in the embodiment is configured to represent a joint transmission indication, namely, configured to indicate JT. If it is necessary to introduce other types of control frames for the next generation WiFi network, other types may be introduced into the Category, and up to 256 types may be introduced.

**Table 2 Description for the value of the category field in the fields within the HEW Indication frame body**

| Code | Meaning |
|---|---|
| **0** | **JT** |
| 1-255 | Reserved |

The value of the indication field indication in the HEW Indication frame body is configured to indicate different types of the control frame in a certain Category, and in this embodiment, it is configured to represent whether this frame is a JT-RTS control frame or a JT-CTS control frame. For example, when the Category indicates that it is the JT type, the Indication may indicate four types of control frames, JT-RTS, JT-CTS, JTR and JTRA, referring to the following Table 3 for the details.

**Table 3 Description for the value of the Indication field when the category field in the fields within the HEW Indication frame body indicates JT**

| Indic ation | Name | Description |
|---|---|---|
| 0 | JT-RTS | This frame is sent by initiated AP to inform STA information of coordinated AP, including how many APs can join JT and Address of these APs |
| 1 | JT-CTS | This frame may be sent by STA to inform how many APs join JT and Address of these APs |
| 2 | JTR | This frame may be sent by STA to request potential APs who can join JT whether they can perform JT now |
| 3 | JTRA | This frame may be sent to respond JTR by coordinated APs who can join JT now |
| 4-255 | Reserved | |

The indication elements field Indication Elements in the HEW Indication frame body is used to describe specific signaling content of a control frame indicated by the Indication field. For example, Table 4 - Table 7 illustrate information that may be contained in the Indication Elements of the four types of control frames, JT-RTS, JT-CTS, JTR and JTRA, respectively.

**Table 4 Content contained in Indication Elements when the Indication field indicates JT-RTS**

| Order | Information | Notes |
|---|---|---|
| 0 | Category | |
| 1 | JT-RTS Indication | |
| 2 | Coordinated AP Number | |
| 3 | MAC Address of Coordinated APs | |

**Table 5 Content contained in Indication Elements when the Indication field indicates JT-CTS**

| Order | Information | Notes |
|---|---|---|
| 0 | Category | |
| 1 | JT-CTS Indication | |
| 2 | Coordinated AP Number | |
| 3 | MAC Address of Coordinated APs | |

**Table 6 Content contained in Indication Elements when the Indication field indicates JTR**

| Order | Information | Notes |
|---|---|---|
| 0 | Category | |
| 1 | JTR Indication | |
| 2 | Coordinated AP Number | |
| 3 | MAC Address of Coordinated APs | |

**Table 7 Content contained in Indication Elements when the Indication field indicates JTRA**

| Order | Information | Notes |
|---|---|---|
| 0 | Category | |
| 1 | JTR A Indication | |
| 2 | Coordinated AP Number | |
| 3 | MAC Address of Coordinated APs | |

As can also be seen from the aforementioned Table 4 - Table 7, for a JTR control frame or a JTRA control frame, the value of the category field category is also configured to represent a joint transmission indication, the value of the indication field indication is configured to represent that this frame is the JTR control frame or the JTRA control frame. The address information of the coordinated AP is set in the indication elements field indication elements, please refer to MAC Address of Coordinated APs in the aforementioned tables.

This embodiment, by introducing a new type of control frame, i.e. HEW Indication, and JT-RTS, JT-CTS, JTR and JTRA defined in a new format under this control frame, not only allows the control frame to be backward compatible, but also realizes more signaling interactions in the method for joint transmission via this control frame, and delivers more information such as the number of coordinated APs, thereby providing support for implementation of the method for joint transmission in WLAN.

### Embodiment 5

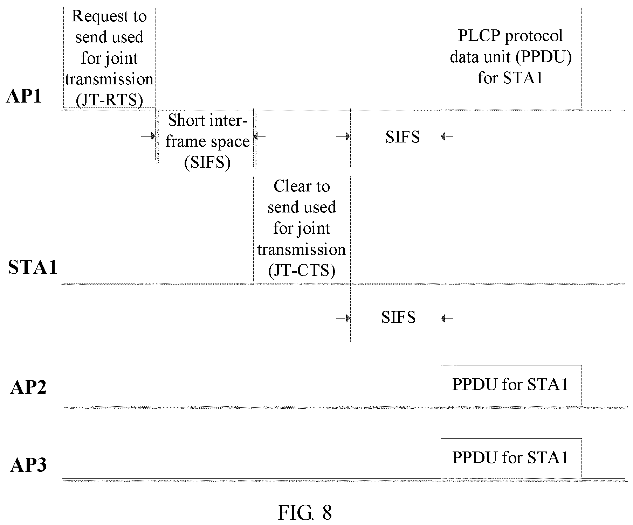

FIG 8 is a flowchart of a transmission process in still another embodiment of the method for joint transmission according to the present invention. As shown in FIG 8, taking AP1, AP2 and AP3 in the scenario shown in FIG 1 as an example, this embodiment assumes that the AP1 (the initiating AP) has established a coordination relationship with the AP2 and the AP3, and has finished information exchange for the joint transmission. Besides, in this embodiment, channel resources for the AP2 and the AP3 may be reserved for this joint transmission; but the channel resource for the AP1 may be reserved or obtained via contention.

After obtaining a right to use a channel via contention, the AP1 sends a JT-RTS control frame to the STA1, where the JT-RTS control frame includes a joint transmission indication and address information of coordinated APs pre-determined to participate in the joint transmission, and also includes the number of these coordinated APs. Refer to the previous embodiment for the specific format of the JT-RTS control frame, and details are not described herein. For example, the category field in the HEW Indication frame body may be set to 0, which represents JT and corresponds to the joint transmission indication. The Indication field in the frame body may be set to 0, which represents a JT-RTS control frame. The address information and the number of coordinated APs may be set in the Indication Elements field.

After receiving the JT-RTS control frame, the STA1 learns, according to the joint transmission indication, that joint transmission is going to be performed subsequently, and learns that this frame is a JT-RTS control frame. The STA1 may send a JT-CTS control frame, this JT-CTS control frame may be broadcasted, so that both the coordinated APs and the initiating AP may receive the JT-CTS control frame, namely, the AP1, the AP2 and the AP3 can all receive the JT-CTS control frame sent by the STA1. In the JT-CTS control frame, the STA1 may set a joint transmission indication and address information of the APs participating in the joint transmission.

Regarding the address information of the APs participating in the joint transmission included in the JT-CTS control frame, the APs may specifically include the coordinated APs and the initiating AP. However, for the coordinated APs, the coordinated APs included in the JT-CTS control frame are obtained from the JT-RTS control frame by the STA1, and are the coordinated APs pre-determined to participate in this JT which are determined by the AP1, such as the AP2 and the AP3. If the channel resources for the coordinated APs are reserved, then in fact, after the STA1 sends the JT-CTS control frame, these coordinated APs can all participate in this JT. If the channel resource for the coordinated APs are obtained via contention rather than reserved, then the coordinated APs pre-determined to participate which are obtained from the JT-RTS control frame and carried in the JT-CTS control frame by the STA1, may not be able to participate in this JT after the STA1 sends the JT-CTS control frame, for example, the AP2 receives the JT-CTS control frame, but fails to obtain a channel resource via contention, and thus will not participate in the joint transmission.

Specifically, after receiving the JT-CTS control frame, both the initiating AP and the coordinated APs may learn that this is a joint transmission according to the joint transmission indication included in the JT-CTS control frame, and may further judge whether the address information in the JT-CTS control frame includes their own address information, and may start to send data to the STA if their own address information is included in the JT-CTS control frame and they themself have channel resources for participating in the JT.

For example, as shown in FIG 8, the AP1, the AP2 and the AP3 may all receive the JT-CTS control frame sent by the STA1, and determine that their own address information is included in this frame and they have channel resources for participating in the JT, then all the AP1, the AP2 and the AP3 send data to the STA simultaneously after an interval of the same fixed time from the JT-CTS control frame. As shown in FIG 8, after an interval of SIFS from the JT-CTS control frame, all the AP1, the AP2 and the AP3 send data, such as the illustrated PLCP protocol data unit (PLCP Protocol Data Unit, PPDU) for STA1, i.e., starting to send data to the STA1.

Optionally, the aforementioned JT-CTS control frame may contain the address of the initiating AP (as described in the above solution), or may not contain the address of the initiating AP. If the aforementioned JT-CTS control frame does not contain the address of the initiating AP, the initiating AP then takes the JT-CTS received after sending of the JT-RTS as a frame for responding the JT-RTS by default, and sends data to the STA accordingly.

In the method for joint transmission according to this embodiment, STA1 sends a JT-CTS control frame to each AP participating in the joint transmission, so that each AP may send data to the STA1 simultaneously after an interval of a fixed time from receiving the control frame, thereby realizing the synchronization of joint transmission.

### Embodiment 6

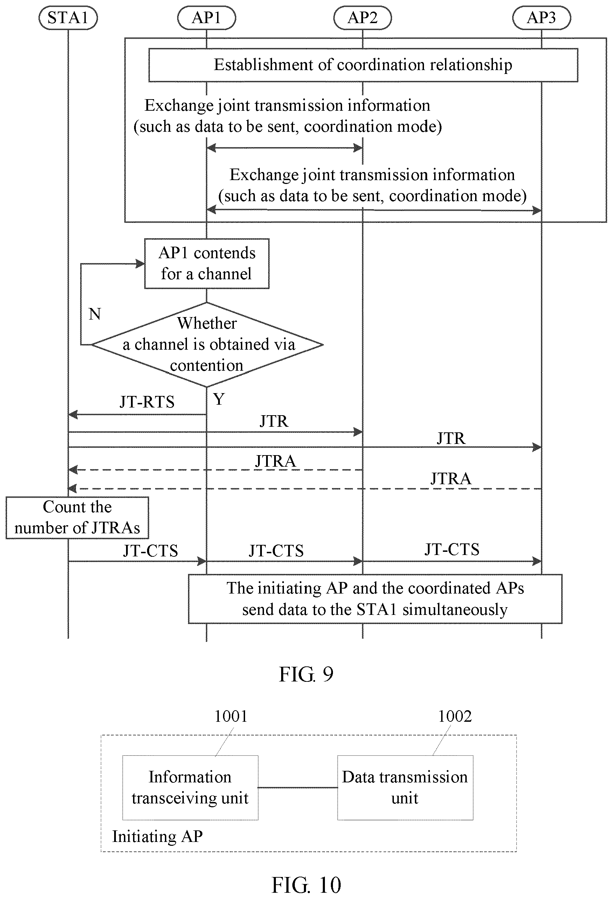

FIG 9 is a flowchart of a transmission process in another embodiment of the method for joint transmission according to the present invention. As shown in FIG 9, AP1, AP2 and AP3 in the scenario shown in FIG 1 are still taken as an example, however, this embodiment describes a joint transmission process based on contention, where channel resources of coordinated APs, such as the AP2 and the AP3, are obtained via contention, rather than as in embodiment 5, where the channel resources of the coordinated APs are reserved in advance.

In the embodiment, the AP1, the AP2 and the AP3 firstly establish a coordination relationship, and after the coordination relationship is established, if the AP1 wants to send data to the STA1 in a coordination manner of joint transmission, then the AP1 needs to exchange joint transmission communication mode information with the AP2 and the AP3, including information about data to be jointly sent to the STA1, different numbers of coordinated APs, joint transmission coordination modes corresponding to the numbers of the APs and etc. Besides, these APs also exchange: whether they will participate in this joint transmission, namely whether they will participate in the coordination.

In this embodiment, the information about the joint transmission coordination mode corresponding to the number of APs needs to be maintained, since transmission resources of the AP2 and the AP3 for the joint transmission are also obtained via contention, this contention results in that at the time when the AP1 obtains the right to use the channel via contention, the AP2 and the AP3 may not be able to have transmission resources to use for the joint transmission. However, the performance of the joint transmission would be substantially decreased if the joint transmission cannot be performed by excepted number of APs. For example, after the AP1, the AP2 and the AP3 establish a coordination relationship, the AP1 wants to send data to the STA1 in a manner of joint transmission, then the AP1 communicates with the AP2 and the AP3 about whether joint transmission can be preformed. The AP2 and the AP3 can only judge whether they are willing to perform the joint transmission and whether they have transmission resources for the joint transmission currently. Due to the uncertainty of the channel resource contention of the AP1, when the AP1 obtains the right to use a channel via contention, the AP2 or the AP3 may have no transmission resource to be used for the joint transmission, and thus cannot participate in the joint transmission. If the original plan is to perform the joint transmission by three APs, the AP1, the AP2 and the AP3, however, when the AP1 obtains the right to use the channel via contention, the AP3 cannot participate in the joint transmission, and thus only the AP1 and the AP2 are left to perform the joint transmission. Then, if the AP1 and the AP2 still send data in accordance with the transmission power and MCS corresponding to a scenario where the three APs all participate in the joint transmission, then the performance of joint transmission would be substantially decreased. Therefore, the joint transmission coordination mode corresponding to the number of the APs should be maintained; depending on how many APs participate in the joint transmission in the end, then data will be sent according to the power and the MCS corresponding to the number of APs performing the joint transmission, so as to ensure the performance of the joint transmission.

After the aforementioned initiating AP and the coordinated APs exchange relevant information about the joint transmission, the AP1 starts to content for the right to use a channel. After obtaining the channel via contention, the AP1 sends a JT-RTS control frame to the STA1 to indicate that joint transmission is going to be performed subsequently, and indicate the number of APs pre-determined to participate in the joint transmission and their address information.

After receiving the JT-RTS frame, the STA1 sends a JTR control frame to the coordinated APs indicated in the JT-RTS, so as to ask these APs whether they can participate in subsequent joint transmission; the JTR frame includes a joint transmission indication and address information of the coordinated APs pre-determined to participate in the joint transmission. The STA1 may broadcast the JTR frame out since the JTR frame is sent to multiple APs simultaneously.

The coordinated AP which receives the JTR frame may check whether its own addresses is in the JTR control frame sent by the STA1. If exist, judge whether it itself can participate in the subsequent joint transmission now, that is, judging whether it has a channel resource to participate in the joint transmission, for example, whether it has a reserved resource or has obtained a resource via contention. If the coordinated AP can participate, then it may return a JTRA control frame to the STA1. If the coordinated AP cannot participate, then it does not return the JTRA control frame.

The STA1 counts the number of received JTRA control frames and the address of APs that send these JTRAs, and decides how many APs would participate in the subsequent joint transmission, namely, determines the number of APs participating in the joint transmission. Then, the STA1 puts the information about how many APs would participate in the joint transmission, namely the number of APs participating in the joint transmission, and the address information of these APs into a JT-CTS control frame and broadcasts it out.

The APs which receive the JT-CTS control frame judge, according to the total number of APs participating in the joint transmission and the address information indicated in the JT-CTS control frame, whether their own address information is in the JT-CTS control frame, and if there is and they have channel resources for participating in the joint transmission, then the APs (including the initiating AP and the coordinated APs) send data to the STA1 in accordance with a joint transmission coordination mode corresponding to the number of APs simultaneously after an interval of SIFS from the JT-CTS control frame. The STA1 receives the data which is sent by the initiating AP and the coordinated APs in accordance with the joint transmission coordination mode corresponding to the number of APs.

Optionally, in this embodiment, the manner in which an AP returns the JTRA is not limited, which may be TDMA, CDMA or other multiple access manner.

### Embodiment 7

FIG 10 is a schematic structural diagram for an embodiment of an initiating AP according to the present invention. This initiating AP can execute any method according to the method embodiments of the present invention. This embodiment merely describes the structure of the initiating AP briefly, referring to the method embodiments for the specific work principle thereof. As shown in FIG 10, the initiating AP in this embodiment may include: an information transceiving unit 1001 and a data transmission unit 1002.

The information transceiving unit 1001 is configured to send a request to send message used for the joint transmission, to a station (STA), where the request to send message includes a joint transmission indication and address information of a coordinated AP pre-determined to participate in the joint transmission, to enable the STA to send, according to the joint transmission indication, a clear to send message used for joint transmission, to the coordinated AP corresponding to the address information and the initiating AP, to enable the coordinated AP to send data to the STA according to the clear to send message; and is configured to receive the clear to send message.

The data transmission unit 1002 is configured to send data to the STA according to the clear to send message after the information transceiving unit 1001 receives the clear to send message, to realize sending the data to the STA simultaneously with the coordinated AP.

Further, the data transmission unit 1002 is specifically configured to send the data to the STA after an interval of a first fixed time from a time when the information transceiving unit 1001 receives the clear to send message, where the first fixed time is the same as a second fixed time, and where the second fixed time is a time interval between receiving the clear to send message and sending the data to the STA by the coordinated AP.

Further, the data transmission unit 1002 is specifically configured to send data to the STA in accordance with a joint transmission coordination mode corresponding to a number of APs participating in the joint transmission.

Further, the information transceiving unit 1001 is further configured to, before receiving the clear to send message, exchange joint transmission communication mode information with the coordinated AP, where the joint transmission communication mode information includes different numbers of APs and joint transmission coordination modes corresponding to the numbers of APs.

Further, the request to send message or the clear to send message is a control frame, including a frame header and a frame body; the frame header includes a subtype field subtype, and the frame body includes a category field category, an indication field indication and an indication elements field indication elements; a value of the subtype field subtype is configured to indicate that the request to send message or the clear to send message is a HEW Indication frame; a value of the category field category is configured to represent a joint transmission indication, a value of the indication field indication is configured to represent that the control frame is a JT-RTS control frame or a JT-CTS control frame; and the address information of the coordinated AP is set in the indication elements field indication elements.

Further, the request to send message or the clear to send message is a control frame, the control frame represents, via the value of the subtype field subtype in the frame header, that the control frame is a JT-RTS control frame or a JT-CTS control frame; and the address information of the coordinated AP is set in a receive address field RA of the frame header.

### Embodiment 8

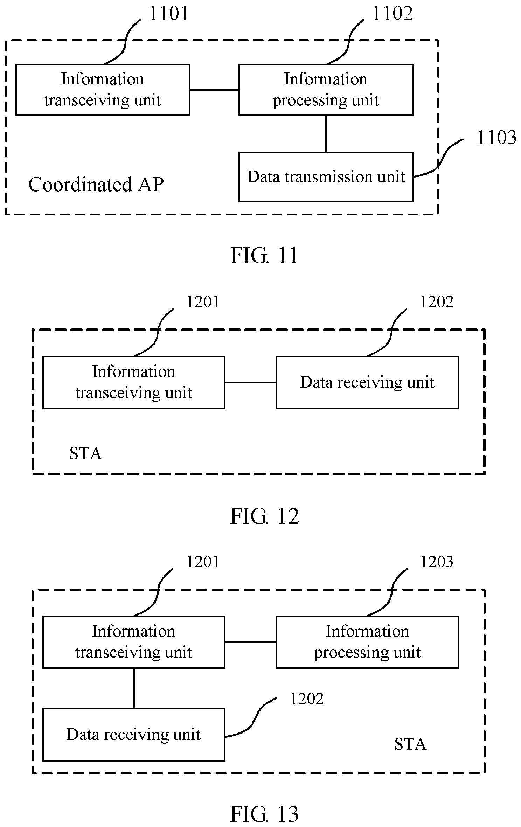

FIG 11 is a schematic structural diagram for an embodiment of a coordinated AP according to the present invention. This coordinated AP can execute any method according to the method embodiments of the present invention. This embodiment merely describes the structure of the coordinated AP briefly, and the method embodiments may be referred to for the specific work principle thereof. As shown in FIG 11, the coordinated AP in this embodiment may include: an information transceiving unit 1101, an information processing unit 1102 and a data transmission unit 1103.

The information transceiving unit 1101 is configured to receive a clear to send message sent by a station (STA), where the clear to send message includes a joint transmission indication and address information of an AP participating in the joint transmission, and where the clear to send message is sent by the STA after receiving a request to send message sent by an initiating AP.

The information processing unit 1102 is configured to judge, according to the joint transmission indication included in the clear to send message, whether the address information in the clear to send message includes its own address information and whether it itself has a channel resource for participating in the joint transmission.

The data transmission unit 1103 is configured to send data to the STA according to the clear to send message when a judging result of the information processing unit is yes, to realize sending data to the STA simultaneously with the initiating AP.

Further, the information transceiving unit 1101 is further configured to, before receiving the clear to send message sent by the STA, receive a joint transmission request message sent by the STA, where the joint transmission request message is configured for the STA to ask the coordinated AP whether to participate in the joint transmission, where the request to send message includes a joint transmission indication and address information of a coordinated AP pre-determined to participate in the joint transmission.

The information processing unit 1102 is further configured to, when determining that its own address information is included in the joint transmission request message and that it itself has the channel resource for participating in the joint transmission, instruct the information transceiving unit to return a joint transmission request acknowledgment message to the STA, to enable the STA to determine a number of APs participating in the joint transmission according to the joint transmission request acknowledgment message, and include the number of APs in the clear to send message.

The data transmission unit 1103 is specifically configured to send data to the STA after an interval of a second fixed time from a time when the clear to send message is received, according to the number of APs participating in the joint transmission included in the clear to send message and in accordance with a joint transmission coordination mode corresponding to the number of APs; where the second fixed time is the same as a first fixed time, and the first fixed time is a time interval between receiving the clear to send message and sending data to the STA by the initiating AP.

Further, the joint transmission request message or the joint transmission request acknowledgment message is a control frame, including a frame header and a frame body; the frame header includes a subtype field subtype, and the frame body includes a category field category, an indication field indication and an indication elements field indication elements; a value of the subtype field subtype is configured to indicate that the joint transmission request message or the joint transmission request acknowledgment message is a HEW Indication frame; a value of the category field category is configured to represent a joint transmission indication, a value of the indication field indication is configured to represent that the control frame is a JTR control frame or a JTRA control frame; and the address information of the coordinated AP is set in the indication elements field indication elements.

### Embodiment 9

FIG 12 is a schematic structural diagram for an embodiment of a station (STA) according to the present invention. This STA can execute any method according to the method embodiment of the present invention. This embodiment merely describes the structure of the STA briefly, and the method embodiments may be referred to for the specific work principle thereof. As shown in FIG 12, the STA in this embodiment may include: an information transceiving unit 1201 and a data receiving unit 1202.

The information transceiving unit 1201 is configured to receive a request to send message sent by an initiating AP, where the request to send message includes a joint transmission indication and address information of a coordinated AP pre-determined to participate in the joint transmission; and to send, according to the joint transmission indication, a clear to send message used for joint transmission, to the coordinated AP corresponding to the address information and the initiating AP.

The data receiving unit 1202 is configured to receive data which is sent according to the clear to send message simultaneously by the initiating AP and the coordinated AP after the initiating AP and the coordinated AP receive the clear to send message.

FIG 13 is a schematic structural diagram for another embodiment of the station (STA) according to the present invention. As shown in FIG 13, based on the structure illustrated in FIG 12, the information transceiving unit 1201 is further configured to send a joint transmission request message to the coordinated AP when a channel resource of the coordinated AP is obtained via contention, where the joint transmission request message is configured for the STA to ask the coordinated AP whether to participate in joint transmission, and the JTR frame includes a joint transmission indication and address information of a coordinated AP pre-determined to participate in the joint transmission; and to receive a joint transmission request acknowledgment message returned by the coordinated AP, where the joint transmission request acknowledgment message is sent by the coordinated AP when determining that its own address information is included in the joint transmission request message and that it itself has a channel resource for participating in the joint transmission.

The STA further includes: an information processing unit 1203, configured to determine, according to the joint transmission request acknowledgment message, a number of APs participating in the joint transmission, and include the number of APs in the clear to send message.

The data receiving unit 1202 is specifically configured to receive data, which is sent to the STA simultaneously by the initiating AP and the coordinated AP in accordance with a joint transmission coordination mode corresponding to the number of APs included in the clear to send message after the initiating AP and the coordinated AP receive the clear to send message.

Persons of ordinary skill in the art may understand that all or part of the steps in the above method embodiments may be implemented by a program instructing relevant hardware. The program may be stored in a computer readable storage medium. When the program is executed, the steps in the foregoing method embodiments are performed. The storage medium may include any medium capable of storing program codes, such as a ROM, a RAM, a magnetic disk, or an optical disk.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that he may still make modifications to the technical solutions described in the foregoing embodiments, or make equivalent replacements to some technical features thereof, without departing from the scope of the technical solutions of the embodiments of the present invention.

## Claims

1. A method for joint transmission, which is applied in a wireless local area network system comprising an initiating access point, AP, a coordinated AP pre-determined to participate in the joint transmission and a station, STA, wherein the method comprises:
sending (201), by the initiating AP to the STA, a request to send message used for the joint transmission, wherein the request to send message comprises a joint transmission indication and address information of the coordinated AP;
receiving, by the initiating AP, a clear to send message from the STA;
sending (202), by the initiating AP, data to the STA after an interval of a first fixed time from receiving the clear to send message, wherein the first fixed time is same as a second fixed time, and where the second fixed time is a time interval between receiving the clear to send message and sending the data to the STA by the coordinated AP.

2. The method according to claim 1, wherein
a channel resource for the coordinated AP is reserved or obtained via contention.

3. The method according to any one of claims 1 to 2, wherein the request to send message or the clear to send message is a control frame, and the control frame comprises a frame header and a frame body, the control frame is indicated in a MAC frame header, wherein
the frame header comprises a subtype field subtype, the frame body comprises a category field category, an indication field indication and an indication elements field indication elements;
a value of the subtype field subtype is configured to indicate that the request to send message or the clear to send message is a HEW Indication frame; a value of the category field category is configured to represent the joint transmission indication, a value of the indication field indication is configured to represent that the control frame is a request to send control frame used for the joint transmission or a clear to send control frame used for the joint transmission; and
the address information of the coordinated AP is set in the indication elements field indication elements.

4. The method according to any one of claims 1 to 3, wherein the method further comprises:
determining, by the initiating AP, the coordinated AP pre-determined to participate in the joint transmission.

5. A method for joint transmission, which is applied in a wireless local area network system comprising a coordinated access point, AP, an initiating AP, and a station, STA, wherein the method comprises:
receiving (301), by the coordinated AP, a clear to send message from the STA, wherein the clear to send message comprises a joint transmission indication and address information of an AP participating in the joint transmission, and the address information of an AP participating in the joint transmission comprises address information of the coordinated AP;
sending (302), by the coordinated AP, data to the STA after an interval of a second fixed time from receiving the clear to send message, wherein the second fixed time is same as a first fixed time, and where the first fixed time is a time interval between receiving the clear to send message and sending the data to the STA by the initiating AP.

6. The method according to claim 5, wherein the method further comprises:
determining, by the coordinated AP, according to the joint transmission indication, that the address information of an AP participating in the joint transmission comprises address information of the coordinated AP and that it itself has a channel resource for participating in the joint transmission.

7. The method according to claim 5 or 6, wherein before the receiving (301), by the coordinated AP, the clear to send message from the STA, further comprising:
receiving, by the coordinated AP, a joint transmission request message from the STA, wherein the joint transmission request message is used to ask the coordinated AP whether to participate in the joint transmission, wherein the joint transmission request message comprises the joint transmission indication and address information of a coordinated AP pre-determined to participate in the joint transmission.

8. The method according to claim 7, wherein the joint transmission request message is a control frame, and the control frame comprises a frame header and a frame body, the control frame is indicated in a MAC frame header.

9. A method for joint transmission, which is applied in a wireless local area network system comprising an initiating access point, AP, a coordinated AP pre-determined to participate in the joint transmission and a station, STA, wherein the method comprises:
receiving (401), by the STA, a request to send message from the initiating AP, wherein the request to send message comprises a joint transmission indication and address information of the coordinated AP;
sending (402), by the STA, according to the joint transmission indication, a clear to send message, to the coordinated AP corresponding to the address information and the initiating AP;
receiving (403), by the STA, data which is sent by the initiating AP after an interval of a first fixed time from receiving the clear to send message and the coordinated AP after an interval of a second fixed time from receiving the clear to send message, wherein the first fixed time is same as a second fixed time.

10. A device for joint transmission, configured to perform any of the methods according to any one of claims 1 to 9.

11. A computer readable storage medium, **characterized in that**, the computer readable storage medium stores computer programs, the computer programs being executed by a computer to implement the method of any one of claims 1 to 9.

## Patentansprüche

1. Verfahren für gemeinsame Übertragung, das in einem "Wireless-Local-Area-Network"-System angewendet wird, das einen initiierenden Zugangspunkt bzw. AP, einen koordinierten AP, der zur Teilnahme an der gemeinsamen Übertragung vorbestimmt ist, und eine Station bzw. STA umfasst, wobei das Verfahren Folgendes umfasst:
Senden (201), durch den initiierenden AP an die STA, einer Anforderung zum Senden einer Nachricht, die für die gemeinsame Übertragung verwendet wird, wobei die Anforderung zum Senden einer Nachricht eine Gemeinsamübertragungsangabe und Adressinformationen des koordinierten AP umfasst,
Empfangen, durch den initiierenden AP, einer "Clear-to-send"-Nachricht von der STA;
Senden (202), durch den initiierenden AP, von Daten an die STA nach einem Intervall einer ersten festen Zeit ab Empfang der "Clear-to-send"-Nachricht, wobei die erste feste Zeit gleich einer zweiten festen Zeit ist und wobei die zweite feste Zeit ein Zeitintervall zwischen dem Empfang der "Clear-to-send"-Nachricht und dem Senden der Daten an die STA durch den koordinierten AP ist.

2. Verfahren nach Anspruch 1, wobei
eine Kanalressource für den koordinierten AP reserviert ist oder über Konflikt erhalten wird.

3. Verfahren nach einem der Ansprüche 1 bis 2, wobei die Anforderung zum Senden einer Nachricht oder der "Clear-to-send"-Nachricht ein Steuerframe ist und der Steuerframe einen Frame-Header und einen Frame-Rumpf umfasst, wobei der Steuerframe in einem MAC-Frame-Header angegeben wird, wobei
der Frame-Header ein Subtypfeld "Subtype" umfasst, der Frame-Rumpf ein Kategoriefeld "Category", ein Angabefeld "Indication" und ein Angabeelemente-Feld "Indication Elements" umfasst,
ein Wert des Subtypfelds "Subtype" dazu ausgelegt ist, anzugeben, dass die Anforderung zum Senden einer Nachricht oder der "Clear-to-send"-Nachricht ein HEW-Angabeframe ist; ein Wert des Kategoriefelds "Category" dazu ausgelegt ist, die Gemeinsamübertragungsangabe zu repräsentieren, ein Wert des Angabefelds "Indication" dazu ausgelegt ist, zu repräsentieren, dass der Steuerframe eine Anforderung zum Senden eines für die gemeinsame Übertragung verwendeten Steuerframes oder eines für die gemeinsame Übertragung verwendeten "Clear-to-send"-Steuerframes ist; und
die Adressinformationen des koordinierten AP in dem Angabeelemente-Feld "Indication Elements" eingestellt werden.

4. Verfahren nach einem der Ansprüche 1 bis 3, wobei das Verfahren ferner Folgendes umfasst:
Bestimmen, durch den initiierenden AP, des koordinierten AP, der zur Teilnahme an der gemeinsamen Übertragung vorbestimmt ist.

5. Verfahren für gemeinsame Übertragung, das in einem "Wireless-Local-Area-Network"-System angewendet wird, das einen koordinierten Zugangspunkt bzw. AP, einen initiierenden AP und eine Station bzw. STA umfasst, wobei das Verfahren Folgendes umfasst:
Empfangen (301), durch den koordinierten AP, einer "Clear-to-send"-Nachricht von der STA, wobei die "Clear-to-send"-Nachricht eine Gemeinsamübertragungsangabe und Adressinformationen eines an der gemeinsamen Übertragung teilnehmenden AP umfasst und die Adressinformationen eines an der gemeinsamen Übertragung teilnehmenden AP Adressinformationen des koordinierten AP umfassen;
Senden (302), durch den koordinierten AP, von Daten an die STA nach einem Intervall einer zweiten festen Zeit ab Empfang der "Clear-to-send"-Nachricht, wobei die zweite feste Zeit gleich einer ersten festen Zeit ist und wobei die erste feste Zeit ein Zeitintervall zwischen dem Empfang der "Clear-to-send"-Nachricht und dem Senden der Daten an die STA durch den initiierenden AP ist.

6. Verfahren nach Anspruch 5, wobei das Verfahren ferner Folgendes umfasst:
Bestimmen, durch den koordinierten AP gemäß der Gemeinsamübertragungsangabe, dass die Adressinformationen eines an der gemeinsamen Übertragung teilnehmenden AP Adressinformationen des koordinierten AP umfassen und dass er selbst eine Kanalressource zur Teilnahme an der gemeinsamen Übertragung aufweist.

7. Verfahren nach Anspruch 5 oder 6, wobei das Verfahren vor dem Empfangen (301), durch den koordinierten AP, der "Clear-to-send"-Nachricht von der STA, ferner Folgendes umfasst:
Empfangen, durch den koordinierten AP, einer Gemeinsamübertragungsanforderungsnachricht von der STA, wobei die Gemeinsamübertragungsanforderungsnachricht verwendet wird, um den koordinierten AP zu fragen, ob er an der gemeinsamen Übertragung teilnimmt, wobei die Gemeinsamübertragungsanforderungsnachricht die Gemeinsamübertragungsangabe und Adressinformationen eines koordinierten AP, der zur Teilnahme an der gemeinsamen Übertragung vorbestimmt ist, umfasst.

8. Verfahren nach Anspruch 7, wobei die Gemeinsamübertragungsanforderungsnachricht ein Steuerframe ist und der Steuerframe einen Frame-Header und einen Frame-Rumpf umfasst, wobei der Steuer-Frame in einem MAC-Frame-Header angegeben wird.

9. Verfahren für gemeinsame Übertragung, das in einem "Wireless-Local-Area-Network"-System angewendet wird, das einen initiierenden Zugangspunkt bzw. AP, einen koordinierten AP, der zur Teilnahme an der gemeinsamen Übertragung vorbestimmt ist, und eine Station bzw. STA umfasst, wobei das Verfahren Folgendes umfasst:
Empfangen (401), durch die STA, einer Anforderung zum Senden einer Nachricht von dem initiierenden AP, wobei die Anforderung zum Senden einer Nachricht eine Gemeinsamübertragungsangabe und Adressinformationen des koordinierten AP umfasst,
Senden (402), durch die STA, gemäß der Gemeinsamübertragungsangabe, einer "Clear-to-send"-Nachricht an den koordinierten AP, der den Adressinformationen entspricht, und den initiierenden AP;
Empfangen (403), durch die STA, von Daten, die durch den initiierenden AP nach einem Intervall einer ersten festen Zeit ab Empfang der "Clear-to-send"-Nachricht und den koordinierten AP nach einem Intervall einer zweiten festen Zeit ab Empfang der "Clear-to-send"-Nachricht gesendet werden, wobei die erste feste Zeit gleich einer zweiten festen Zeit ist.

10. Vorrichtung für gemeinsame Übertragung, ausgelegt zum Durchführen eines der Verfahren nach einem der Ansprüche 1 bis 9.

11. Computerlesbares Speichermedium, **dadurch gekennzeichnet, dass** das computerlesbare Speichermedium Computerprogramme speichert, wobei die Computerprogramme durch einen Computer ausgeführt werden, um das Verfahren nach einem der Ansprüche 1 bis 9 zu implementieren.

## Revendications

1. Procédé de transmission conjointe, qui est appliqué dans un système de réseau local sans fil comprenant un point d'accès, AP, d'initiation, un AP coordonné prédéterminé pour participer à la transmission conjointe et une station, STA, dans lequel le procédé comprend :
l'envoi (201), par l'AP d'initiation à la STA, d'un message de demande d'envoi utilisé pour la transmission conjointe, dans lequel le message de demande d'envoi comprend une indication de transmission conjointe et des informations d'adresse de l'AP coordonné ;
la réception, par l'AP d'initiation, d'un message prêt à émettre depuis la STA ;
l'envoi (202), par l'AP d'initiation, de données à la STA après un intervalle d'un premier temps fixé à partir de la réception du message prêt à émettre, dans lequel le premier temps fixé est identique à un second temps fixé, et le second temps fixé est un intervalle temporel entre la réception du message prêt à émettre et l'envoi des données à la STA par l'AP coordonné.

2. Procédé selon la revendication 1, dans lequel :
une ressource de canal pour l'AP coordonné est réservée ou obtenue par contention.

3. Procédé selon l'une quelconque des revendications 1 à 2, dans lequel le message de demande d'envoi ou le message prêt à émettre est une trame de commande, et la trame de commande comprend un en-tête de trame et un corps de trame, la trame de commande est indiquée dans un en-tête de trame MAC, dans lequel
l'en-tête de trame comprend un sous-type de champ de sous-type, le corps de trame comprend une catégorie de champ de catégorie, une indication de champ d'indication et des éléments d'indication de champ d'éléments d'indication ;
une valeur du sous-type de champ de sous-type est configurée pour indiquer que le message de demande d'envoi ou le message prêt à émettre est une trame d'indication HEW ; une valeur de la catégorie de champ de catégorie est configurée pour représenter l'indication de transmission conjointe, une valeur de l'indication de champ d'indication est configurée pour représenter que la trame de commande est une trame de commande de demande d'envoi utilisée pour la transmission conjointe ou une trame de commande prête à émettre utilisée pour la transmission conjointe ; et
les informations d'adresse de l'AP coordonné sont définies dans les éléments d'indication de champ d'éléments d'indication.

4. Procédé selon l'une quelconque des revendications 1 à 3, dans lequel le procédé comprend en outre :
la détermination, par l'AP d'initiation, de l'AP coordonné prédéterminé pour participer à la transmission conjointe.

5. Procédé de transmission conjointe, qui est appliqué dans un système de réseau local sans fil comprenant un point d'accès, AP, coordonné, un AP d'initiation, et une station, STA, dans lequel le procédé comprend :
la réception (301), par l'AP coordonné, d'un message prêt à émettre depuis la STA, dans lequel le message prêt à émettre comprend une indication de transmission conjointe et des informations d'adresse d'un AP participant à la transmission conjointe, et les informations d'adresse d'un AP participant à la transmission conjointe comprennent des informations d'adresse de l'AP coordonné ;
l'envoi (302), par l'AP coordonné, de données à la STA après un intervalle d'un second temps fixé à partir de la réception du message prêt à émettre, dans lequel le second temps fixé est identique à un premier temps fixé, et le premier temps fixé étant un intervalle temporel entre la réception du message prêt à émettre et l'envoi des données à la STA par l'AP d'initiation.

6. Procédé selon la revendication 5, dans lequel le procédé comprend en outre :
la détermination, par l'AP coordonné, en fonction des informations de transmission conjointe, que les informations d'adresse d'un AP participant à la transmission conjointe comprennent les informations d'adresse de l'AP coordonné et qu'il dispose lui-même d'une ressource de canal pour participer à la transmission conjointe.

7. Procédé selon la revendication 5 ou 6, dans lequel avant la réception (301), par l'AP coordonné, du message prêt à émettre depuis la STA, le procédé comprend en outre :
la réception, par l'AP coordonné, d'un message de demande de transmission conjointe depuis la STA, dans lequel le message de demande de transmission conjointe est utilisé pour demander à l'AP coordonné s'il participe ou non à la transmission conjointe, dans lequel le message de demande de transmission conjointe comprend les indications de transmission conjointe et des informations d'adresse d'un AP coordonné prédéterminé pour participer à la transmission conjointe.

8. Procédé selon la revendication 7, dans lequel le message de demande de transmission conjointe est une trame de commande, et la trame de commande comprend un en-tête de trame et un corps de trame, la trame de commande est indiquée dans un en-tête de trame MAC.

9. Procédé de transmission conjointe, qui est appliqué dans un système de réseau local sans fil comprenant un point d'accès, AP, d'initiation, un AP coordonné prédéterminé pour participer à la transmission conjointe et une station, STA, dans lequel le procédé comprend :
la réception (401), par la STA, d'un message de demande d'envoi depuis l'AP d'initiation, dans lequel le message de demande d'envoi comprend une indication de transmission conjointe et des informations d'adresse de l'AP coordonné ;
l'envoi (402), par la STA, en fonction de l'indication de transmission conjointe, d'un message prêt à émettre, à l'AP coordonné correspondant aux informations d'adresse et à l'AP d'initiation ;
la réception (403), par la STA, de données qui sont envoyées par l'AP d'initiation après un intervalle d'un premier temps fixé à partir de la réception du message prêt à émettre et l'AP coordonné après un intervalle d'un second temps fixé à partir de la réception du message prêt à émettre, dans lequel le premier temps fixé est identique au second temps fixé.

10. Dispositif de transmission conjointe, configuré pour exécuter l'un quelconque des procédés selon l'une quelconque des revendications 1 à 9.

11. Support de stockage lisible par ordinateur, **caractérisé en ce que** le support de stockage lisible par ordinateur stocke des programmes informatiques, les programmes informatiques étant exécutés par un ordinateur pour mettre en oeuvre le procédé selon l'une quelconque des revendications 1 à 9.
